# EUROPEAN PATENT SPECIFICATION

(11) **EP 2 834 691 B1**
(45) Date of publication and mention of the grant of the patent: **15.03.2017**
(21) Application number: 12713716.4
(22) Date of filing: 05.04.2012
(51) Int. Cl.: G02B 6/44

(54) **OPTICAL FIBER TRAY AND OPTICAL FIBER MANAGEMENT TRAY ASSEMBLY**
GLASFASERKASSETTE UND VERWALTUNGSANORDNUNG FÜR DIE GLASFASERKASSETTE
PLATEAU DE FIBRES OPTIQUES ET ENSEMBLE PLATEAU DE GESTION DE FIBRES OPTIQUES

(43) Date of publication of application: 11.02.2015
(73) Proprietor: Prysmian S.p.A., 20126 Milano (IT)
(72) Inventor: ABBIATI, Fabio, 20126 Milano (IT); LE DISSEZ, Arnaud, 20126 Milano (IT)
(74) Representative: Colombo, Stefano Paolo
(86) International application number: PCT/EP2012/056281
(87) International publication number: WO 2013/149667

(56) References cited:
- WO-A1-97/22025
- DE-U1- 9 106 205
- US-A1- 2009 058 018
- US-A1- 2010 183 274

## Description

### Technical field

The present invention relates to the field of apparatuses and components for the installation of optical access networks. In particular, the present invention relates to an optical fiber tray and a tray assembly for managing optical fibers.

### Background art

An optical fiber comprises a core of optically glass surrounded by at least another layer of glass, called cladding. The core is the light-carrying part and the cladding provides the difference in refractive index that allows total internal reflection of light through the core.

Optical fibers comprise also a coating around the cladding. Said coating is typically a layer or layers of polymer protecting the core and cladding from shocks that might affect their optical or physical properties. Optionally said coating, or outer layer of said coating is coloured, or an ink layer is provided on said coating, for colour coding the fibers. Bare fibers (core and cladding, plus coating) may have an external diameter of about 200 µm to about 300 µm. A typical outer diameter for a bare fiber is of about 250 µm.

Bare fibers are usually covered with an outer layer, or buffer coating, that protects the fiber from mechanical damage or breakage during handling and cabling operations. The buffer is one of two types: loose buffer or tight buffer. The tight buffer is a protective coating placed over the bare fiber. The loose buffer is a tube much larger than the bare fiber that allows movement of the fiber within the cable. Buffered fibers may have an external diameter of about 600 µm to about 1300 µm.

Bare fibers and/or buffered fibers are used for the production of optical fiber cables including also strength members and outer jackets.

An FTTH ("Fiber To The Home") network is an optical access network providing a number of end users with broadband communication services, i.e. with services requiring data transmission at a rate of some hundreds of Mbit/s or more. Typically, an FTTH network comprises a distribution cabinet which cooperates with an access network and which is typically located in the basement of a building where the end users reside. An optical trunk cable, that is also typically termed "riser cable", exits the distribution cabinet and runs through the building from the basement up to all the building floors. At each floor of the building, the riser cable may be optically connected to one or more optical cables, termed "drop cables". Each drop cable is typically terminated at its far end by a respective customer termination box located within or in proximity of the apartment or office of an end user.

In known embodiments, the distribution cabinet may comprise two (or more) user modules and two (or more) operator modules which are structurally independent one from the other. Advantageously, the user modules and the operator modules may be mounted on top of each other at respective facing walls thereof, for example their upper and lower walls.

The user modules are connected to the user network of the building and each of them allows carrying out the connection with a predetermined number of users, for example 24 users. On the other hand, the operator modules are connected to an external communication network which is possibly shared by a number of telecommunication service providers. Each of the operator modules belongs to a telecommunication service provider.

Each of the user modules comprises at least one opening for one or more connection cables of the user network and a plurality of adapters associated to respective optical fibers of the connection cables. The adapters of the user modules may be associated to the respective optical fibers of the connection cables of the user network by means of a plurality of pigtails.

Preferably, the pigtails are associated to the optical fibers of the connection cables of the user network by splicing the fibers. The splices formed in this way are preferably housed in respective splicing seats formed in a plurality of support trays, preferably stacked on each other, so as to increase the overall number of users which may be connected by means of a single user module.

WO 2009/031172 A1 discloses a modular system and methods for connecting an external communication network to a user network of a building. Each module of WO 2009/031172 A1 includes support trays configured for receiving optical fibers extracted from connection cables of the user network and from pigtails housed in the user modules. The support trays are rotatably mounted in the user module and are hinged to a support element fixed to one of the walls of the user modules.

US 2011/0164854 discloses a fiber distribution enclosure with extractable organizer. Fiber entrance/exit channels are formed as extensions that extend away from the main splice tray body.

US 7,054,535 discloses an optical fiber management assembly with storage trays. The optical fibers are brought to the module entry zone in buffer tubes; the buffer tube is then removed and the bare fibers are guided around the rest of the assembly to reach trays.

US 2010/183274 A1 discloses a fiber circuit management system with splice tray.

### Summary of the invention

WO 2009/031172 A1 discloses support trays configured for receiving buffered optical fibers but it fails to disclose any arrangement for receiving bare fibers. It should be remarked that the arrangement for receiving and retaining optical fibers of WO 2009/031172 A1 is unable to manage bare fibers for several reasons. The first reason is that the bare fibers have a smaller diameter than the buffered fibers. This would result in that the bare fibers would be not retained in the larger receiving and retaining arrangements which are configured for a larger fiber outer diameter. Another main reason is that the bare fibers are more fragile than the buffered fibers. Bending stresses of such bare fibers should be extremely limited or, more preferably, completely avoided, for example by using a guiding support element. The arrangement of WO 2009/031172 A1 does not provide any element for guiding and supporting the optical fibers to reach the trays.

The entrance/exit channels of US 2011/0164854 may be used both for bare and buffered fibers. Inconveniently, buffered fibers must pass through a latching mechanism to reach the splice tray. This pathway is uncomfortable for the insertion operations and it is needless for buffered fibers. Inconveniently, the latching mechanism extends along the whole length of the tray back edge and, since the entrance/exit channels have to be large enough to house buffered fibers, the whole assembly results bulky.

US 7,054,535 discloses trays only dealing with bare optical fibers and no dedicated entries for buffered optical fibers are provided in the assembly. It should be remarked that the arrangement of US 7,054,535 is unable to manage buffered fibers essentially because said fibers are too bulky to pass through to the narrow channels of the support module. Moreover, the support modules extend along the whole length of the tray back edge.

The Applicant has tackled the problem of providing a tray assembly for managing optical fibers which could receive both bare fibers and buffered fibers in a compact assembly. It has been found that a compact tray assembly, housing both bare fibers and buffered fibers, can be obtained by providing two separate and independent ports for bare and buffered fibers respectively.

According to a first aspect of the invention, it is provided an optical fiber tray for holding at least a length of an optical fiber in a proper arrangement, said tray having a hinge in its rear side with a hinge axis for connection to a support arm, wherein said tray comprises:
at least a first port arranged at the rear side of the tray and configured for allowing optical fibers of a first type to enter/exit the tray, and
a guiding member comprising a second port on the hinge axis and configured for allowing optical fibers of a second type to enter the tray along said hinge axis;
wherein said guiding member is arranged in a central region of the rear side, projects from said rear side of said tray and is independent from said first port,
wherein the hinge of the tray comprises two hinge pivots and two support walls supporting the two hinge pivots, wherein the guiding member is arranged between the two support walls.

The guiding member may comprise a channel which is substantially open on the top. The open top could be partially closed by projecting tabs.

In embodiments of the invention, the guiding member comprises a linear length and a curved end so that when the optical fiber of the second type is at least partially within the guiding member, a length of the optical fiber of the second type which is not supported by the guiding member has its axis substantially coinciding with said hinge axis.

In embodiments of the invention, the optical fiber tray comprises two first ports positioned on either side of the rear side.

Preferably, an outer edge of the first ports is at a length from the hinge axis of the tray.

Preferably, the first ports are recessed so that a receiving space is provided.

In embodiments of the invention, the optical fiber tray further comprises a recess having a length and a width comprised between a minimum width and a maximum width. The length could be between 15 mm and 25 mm. The minimum width could be between 15 mm and 25 mm and the maximum width could be between 40 mm and 60 mm.

Preferably, the optical fibers of the second type are bare optical fibers and comprise a core, a cladding, a coating and are free from a buffer layer around said coating; the optical fibers of the first type are buffered optical fibers and comprise a core, a cladding, a coating and a buffer layer around said coating.

According to a second aspect, the present invention provides an optical fiber management tray assembly comprising the support arm and at least one optical fiber tray as set forth above.

### Brief description of the drawings

The present invention will become fully clear by reading the following detailed description, given by way of example and not of limitation, to be read by referring to the accompanying drawings, wherein:
- Figure 1 is a lateral axonometric view of a tray assembly according to one embodiment of the invention;
- Figure 2 is a back axonometric view of a tray assembly according to one embodiment of the invention;
- Figure 3 shows the tray assembly of Figure 1 with two trays which are upwardly rotated;
- Figure 4 is a lateral view of the tray assembly with its support arm connected to a vertical wall (not shown);
- Figure 5 is a lateral view similar to the lateral view of Figure 4 wherein two trays are rotated with respect to the remaining trays;
- Figure 6 is a plan top view of a tray according to one embodiment of the invention;
- Figure 6.1 illustrates the dimensions of a receiving space and portions of some buffered optical fibers;
- Figure 6.2 is an enlarged detail of Figure 6;
- Figure 7 is an axonometric view of the tray of Figure 6;
- Figure 8 is an axonometric view of the tray of Figure 6 in a different configuration;
- Figure 9 is a front axonometric view of a support arm without trays;
- Figure 9.1 also shows, in a diagrammatic manner, the bare optical fibers;
- Figure 10 is a back axonometric view of a support arm without trays;
- Figure 11 is an enlarged detail of the top tray hinged to the support arm; and
- Figure 12 is an enlarged detail of two trays hinged to the support arm.

### Detailed description of preferred embodiments of the invention

In the following detailed description, any directional language such as "front", "rear", "lateral", "top", "bottom", "right", "left" will be used with reference to the orientation of the figures being described. However, it should be clear that the direction language is used for purposes of illustration and not of limitation.

The tray assembly of the present invention comprises a support arm and one or more trays. The tray assembly will be indicated by reference number 1 and the support arm and the trays will be indicated by reference numbers 2 and 3, respectively.

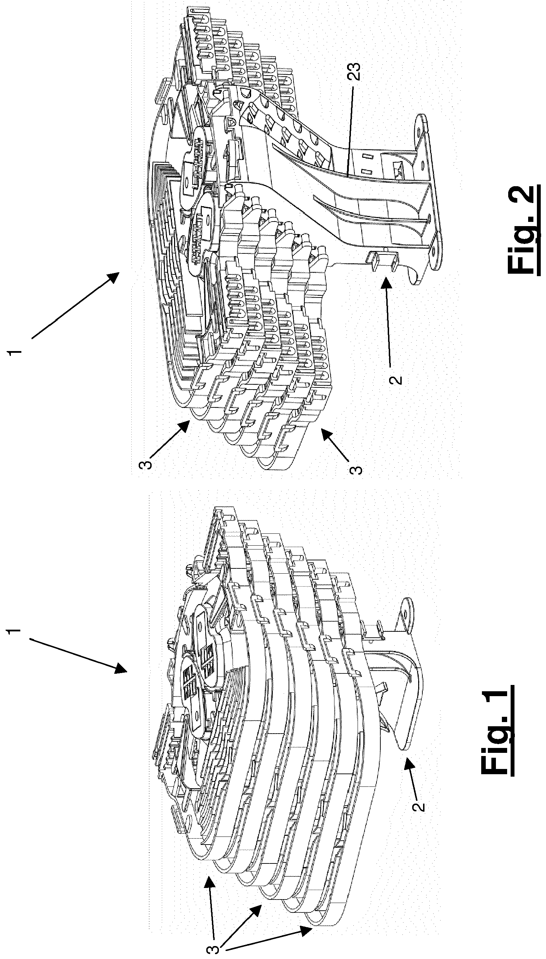

In the embodiment shown in Figures 1 to 5 six trays 3 are connected to the support arm 2. However, this number should be intended as an example in that there could be more than six trays 3 or less than six trays 3. These arrangements are not shown in the drawings.

In one configuration (Figures 1, 2 and 4), the trays 3 are stacked. Preferably, the trays 3 are partially staggered stacked in a stairs-like arrangement. With specific reference to Figures 1 and 2, in this configuration the front edge of the bottom tray is outwardly projecting with respect to front edge of the second last tray. Therefore, among the front edges of all the trays, the front edge of the top tray is the most retracted one. Similarly, the rear edges of the trays are configured in the opposite manner so that the rear edge of the top tray is more projecting outwardly than the rear edge of the bottom tray.

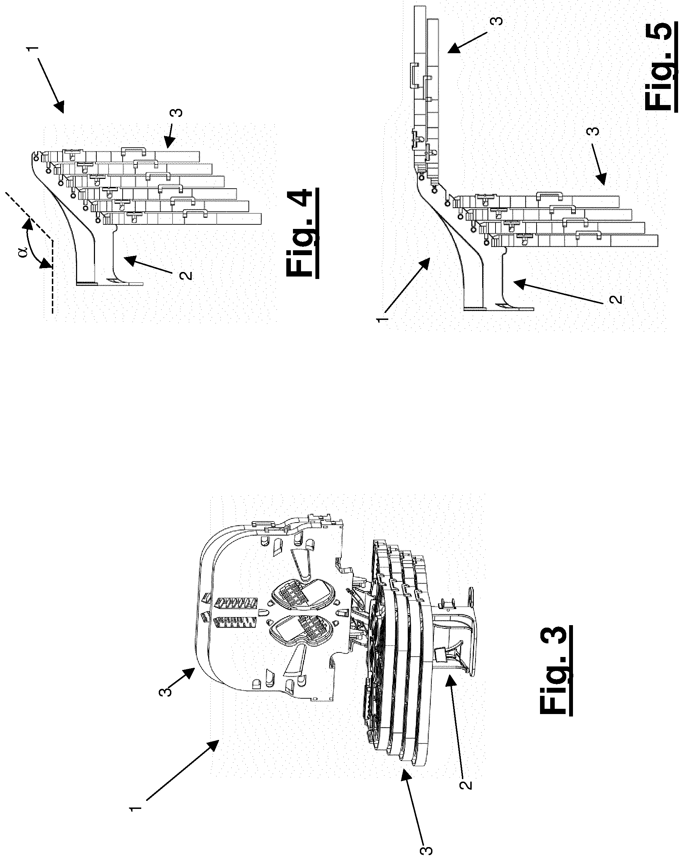

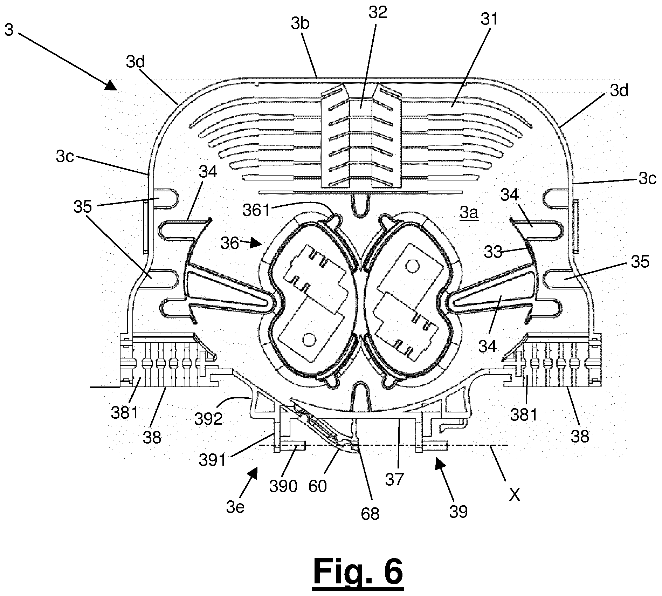

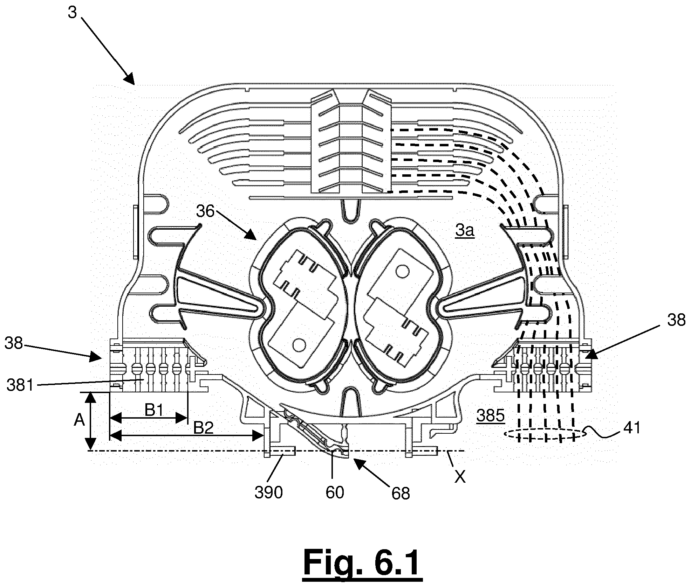

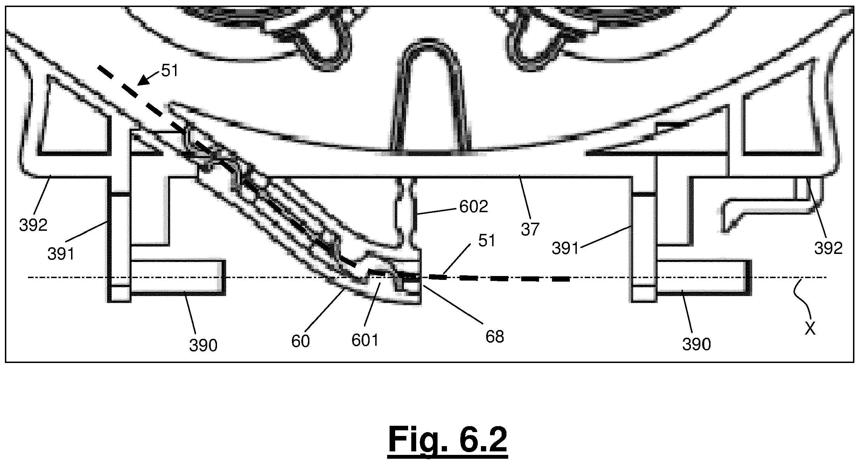

As it will become clear in the following, each of the trays 3 is hinged to the support arm 2 in such a way that it can be rotated around the hinge axis X (shown in figure 6). Figure 3 shows the tray assembly 1 of Figures 1 and 2 with two trays which have been rotated upwardly. Rotation of the trays 3 is a rotation of about 90 degrees. Arrangements could be provided for maintaining the rotated trays in such a rotated position (see Figure 5).

The top tray 3 can be freely rotated while maintaining the remaining trays in the rest stacked position. However, if the second tray (namely the tray below the top one) has to be rotated, also the top tray should rotate together. Finally, if the bottom tray has to be rotated all the other trays should rotate.

The tray assembly 1 of the present invention could be connected to a wall of a distribution cabinet or the like. The connection wall can be a horizontal wall but it is preferably a vertical wall. In case of a vertical wall, also the trays will be arranged substantially vertically (Figure 4) in their rest position and substantially horizontally in their rotated position (see the two top trays of Figure 5).

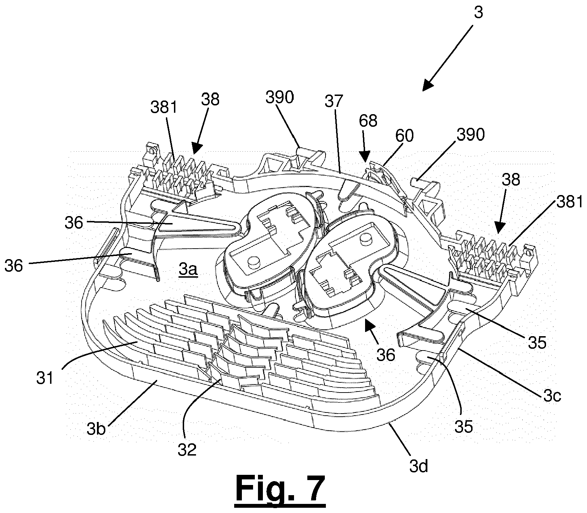

Having mainly reference to Figures 6, 7 and 8, a tray 3 of the tray assembly 1 of the present invention will be described in detail. Preferably, all the trays 3 of the assembly 1 have the same shape and features. Tray 3 could hold passive and/or active optical components, as well as optical fiber splices.

Tray 3 comprises a floor surface 3a which can be shaped in any possible manner. An edge wall upwardly projects substantially perpendicular with respect to the floor surface 3a. Preferably, the edge wall follows, at least partially, the edge of the floor surface 3a. In the embodiment shown in the drawings, the edge wall comprises a front wall 3b, a rear side 3e and two side walls 3c. The side walls 3c and the front wall 3b are preferably connected together by curved lateral wall lengths 3d. Preferably, the tray 3 has a hinge 39 in its rear side 3e with a hinge axis (X) for connection to the support arm 2.

The rear side 3e of the tray 3 will be described in detail in the following of the present description.

Preferably, proper paths, retaining devices and seats for housing fiber splices, lengths of optical fibers or the like can be provided in the tray 3 according to the present invention.

With reference to Figures 6, 7 and 8, by way of non limiting example, the tray comprises paths 31 and seats 32 for optical fiber spices (the optical fiber splices are not shown in the Figures). The paths 31 can be substantially parallel one to the others and they are preferably substantially parallel to the front wall 3b.

With reference to Figures 6, 7 and 8, by way of non limiting example, the tray 3 comprises guiding walls 33 with substantially horizontal tabs 34 which project from an upper edge of said guiding walls 33. Profitably, such guiding walls 33 are curved walls. Further tabs 35 projecting from the lateral walls could be provided. In this manner, a guided path for lengths of optical fibers is provided. Such guided path is therefore delimited by a portion of the floor surface 3a, by the guiding and lateral walls 33, 3c and by the projecting tabs 34, 35 which extend substantially horizontally parallel to the floor surface 3a in order to provide a certain closure on the top to prevent the optical fibers to leave the tray 3.

In the embodiment of the figures, the tray comprises a central mandrel 36, possibly divided into two half mandrels, having a curved shape. The mandrel 36 could be profitably provided with outwardly projecting tabs 361 which maintain the lengths of fibers on the tray.

The tray assembly of the present invention is configured for receive both bare fibers and buffered optical fibers. In particular, the tray 3 comprises at least a dedicated first port 38 for optical fibers of a first type and at least a dedicated second port 68 for optical fibers of a second type.

Preferably, the optical fibers of the second type are bare optical fibers and comprise a core, a cladding, a coating and are free from a buffer layer around said coating; the optical fibers of the first type are buffered optical fibers and comprise a core, a cladding, a coating and a buffer layer around said coating. Thus, the tray 3 comprises at least a dedicated first port 38 for buffered fibers and at least a dedicated second port 68 for bare fibers.

As shown in figure 6, the second port 68 for bare fibers is provided along the hinge axis X, so that the bare fibers entering the tray 3 are subject to only a limited torsion substantially around said hinge axis X. Preferably, the second port 68 for bare fibers is provided on a guiding member 60 projecting from the rear side of the tray 3. The first port 38 for buffered fibers is provided at the rear side 3e of the tray 3. More preferably, the tray 3 comprises two first ports 38 positioned on either side of the rear side 3e of the tray.

With further reference to Figures 6, 6.1, 6.2, 7 and 8, the rear side 3e of the tray 3 will be described in detail. It comprises a central back wall 37 and two first ports 38. Preferably, the two first ports 38 are positioned on either side of the central back wall 37.

The first port 38 is configured for allowing a number of buffered fibers (partially shown in Figure 6.1 by dotted lines) to enter the tray and/or to exit therefrom. The first port 38 comprises a plurality of slots 381 for the passage of buffered optical fibers. In the embodiment shown in the figures, there are provided five slots 381 for five corresponding buffered optical fibers 41. However, this number is just an example and it is not intended to limit the scope of protection of the present invention because the number of slots 381 could be higher or lower than five. Each of the slots 381 is preferably configured with a bottom portion, two parallel walls and facing notches which provide a reduction of the width of the slot in order to retain the outer surface of a buffered optical fiber 41.

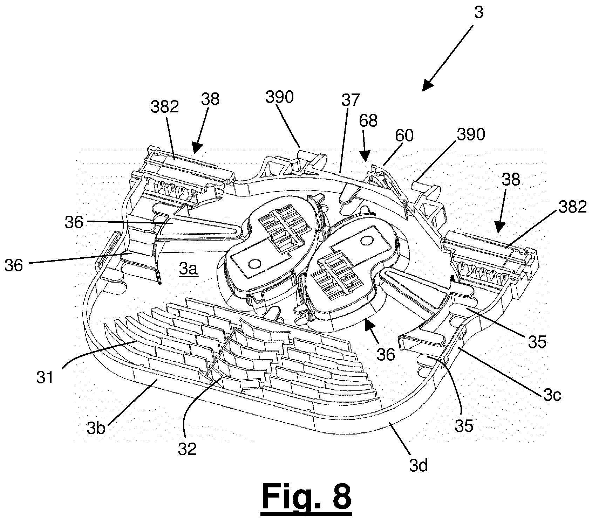

In the embodiment shown in the figures, all the slots 381 of the first ports 38 are parallel. As it is shown in Figure 8, two covers 382 could be arranged for providing a ceiling closure for the slots 381. Profitably, in embodiments of the invention, each of the covers 382 could be hinged at one side so that the cover 382 could be brought from an open position to a closed position (as in Figure 8). Profitably, a latch (not shown) could be provided in order to maintain the cover 382 in the closed position.

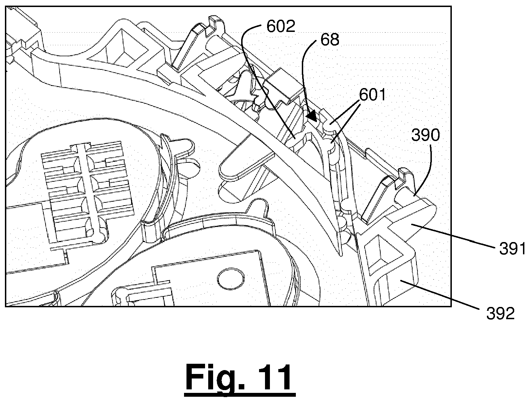

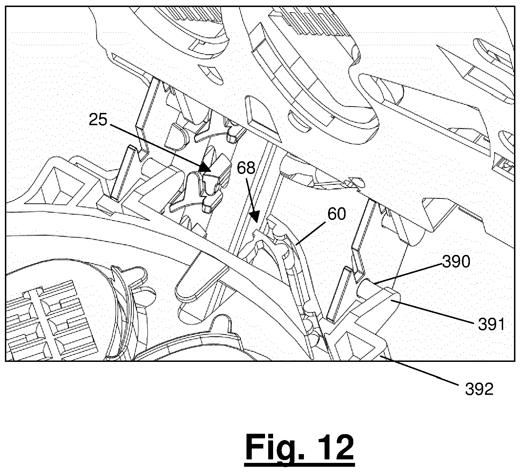

Now, the central back wall 37 will be described in detail with reference again to figures 6, 7 and 8 and also to Figures 11 and 12. The central back wall 37 houses the guiding member 60 for at least one bare optical fiber 51 (a portion of a bare optical fiber is diagrammatically shown in Figure 6.2 by a dotted line). Preferably, the central back wall 37 houses the hinge 39 for connecting the tray 3 to the support arm 2 in a pivotable manner.

The guiding member 60 is in the form of a channel which is substantially open on the top and substantially closed on the bottom. However, preferably, the top of the channel 60 is partially closed by projecting tabs 601 (see Figure 11). In the embodiment shown in the figures, there are provided two pairs of facing tabs 601 projecting from the top of the lateral walls which form the channel 60.

The channel 60 projects outwardly from the tray 3 in such a way that the entrance of the channel 60, which corresponds to the second port 68 for bare fibers, is at a distance from the central back wall 37. Such a distance could be about 10 mm. The channel 60 projects outwardly from the tray 3 in such a way that the entrance of the channel 60, i.e. the second port 68 for bare fibers, lies on the hinge axis X. The entrance of the channel 60 could be a free end not connected to the central back wall 37. In other embodiments, as shown in Figures 6 and 11, the entrance of the channel could be connected to the central back wall in order to render it stronger and more adapted to maintain the bare optical fiber in the correct and precise configuration. The connection (see Figure 11) can be provided by a connecting baffle 602.

The channel 60 is preferably provided with a linear length and a curved end portion which terminates at the entrance of the channel 60. Figure 6.2 shows an enlarged view of the channel 60. It also shows, in a diagrammatic way (by a dotted line), a length of bare optical fiber 51 entering the tray 3 through the entrance of the channel 60. It becomes clear (see Figure 6.2) that the curved end portion is configured for arranging and maintaining the length of optical fiber 51 in a direction which is substantially corresponding to a hinge axis X.

Preferably, the curved end portion of channel 60 has a radius of about 10 to about 30 mm. More preferably, the curved portion of channel 60 has a radius of about 15 mm.

The hinge 39 can comprise two pivots 390 as shown in Figures 6, 7 and 8. Preferably, the pivots 390 have a circular cross-section. In the embodiment shown in the drawings, each of the pivots 390 is connected to a corresponding support wall 391 which is in turn connected to the back wall 37 of the tray 3. Preferably, each of the pivots 390 forms an angle of about 90 degrees with the support wall 391. In turn, the support walls 391 form an angle of 90 degrees with the back wall 37. Therefore, the hinge axis X is substantially parallel to the back wall 37.

In the embodiment of the drawings, the pivots 390 project in the same direction. In other words, the free end of the two pivots 390 is on the same side (right side in the Figures).

Reinforcements 392 could be provided for reinforcing the connection between the support walls 391 and the back wall 37.

A shown in figure 6.1, the first port 38 is recessed with respect to the hinge axis X in the front direction, namely in the direction towards the front of the tray 3. Still in other terms, the hinge axis X projects in the back direction with respect to the first port 38. The first port 38 is recessed with respect to the hinge axis X by a length A. The length A corresponds to the distance between the hinge axis X and the outer edge of the first port 38. Length A can be from about 15 mm to about 25 mm.

As shown in the figures, in particular in Figure 6.1, a receiving space 385 is provided in front of each of the first ports 38. Such a receiving space 385 is realized by providing the recess 385. The length of such a recess 385 is indicated by reference number A and the width of such a recess 385 is indicated by reference numbers B1 (minimum width) and B2 (maximum width). Preferably, two identical recesses are provided at each of the ends of the back wall 37.

The width of the recess 385 is at least corresponding to the length of the outer edge of the first port 38, i.e. the width of the recess 385 is at least equal to B1. Width B1 can be from about 15 mm to about 25 mm.

In preferred embodiments, the width of the recess 385 is higher than B1 and it ends at the support wall 391, see reference number B2 in Figure 6. The width of the recess 385 is comprised between B1 and B2. Width B2 can be from about 40 mm to about 60 mm. Thus, the width of recess 385 is comprised between about 15 mm and about 60 mm.

Therefore, the recess 385 is delimited by the edge of the first port 38, by the support wall 391 and by a shaped wall (possibly including the reinforcement 392) therebetween.

The presence of the recess 385 and of the corresponding space facilitates the insertion operations of said fibers into the tray 3: in the close periphery of the first port 38 the buffered fibers are free from constrains and thus can be easily handled by the installer.

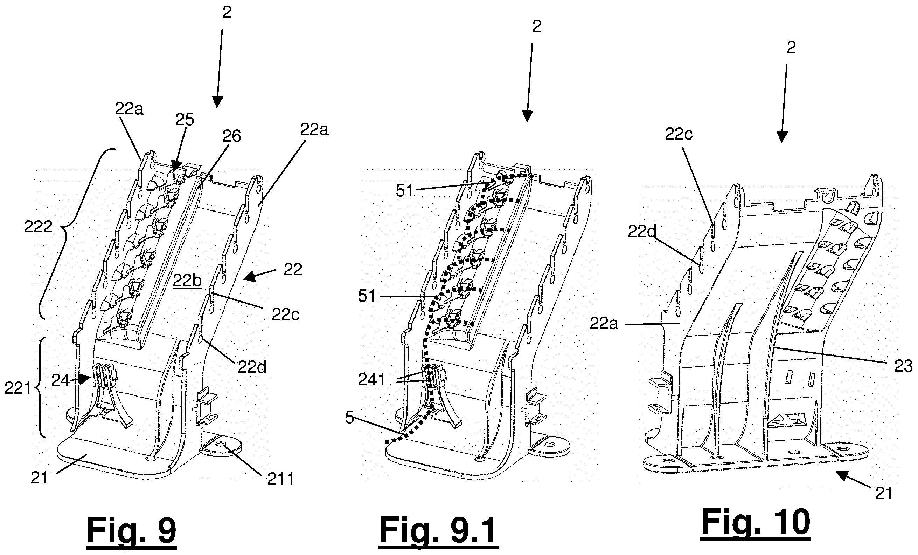

With reference now to Figures 9 and 10 the supporti arm 2 will be described in detail. The support arm 2 comprises a base 21 and a section 22 which is substantially "U" shaped in cross-section. The base 21 comprises a flat surface with holes 211 for connecting the base to a wall (not shown). The section 22 comprises a first length 221, connected to the base 21, which is substantially perpendicular to the base 21, and a second length 222 which terminates at a free end. The second length 222 is inclined with respect to the first length 221. Preferably, the second length 222 is inclined by an angle α of about 135 degrees with respect to the first length 221. The angle α is indicated in Figure 4. In view of the inclination between the two lengths 221, 222, reinforcement arrangements 23 are provided in the back of the arm 2.

The "U" shape of the section 22 is provided by two parallel section wings 22a and a section bottom surface 22b therebetween. Each of the two parallel section wings 22a comprises a plurality of indentations 22c and holes 22d. The indentations 22c and holes 22d of one section wing face the indentations 22c and holes 22d of the other section wing.

The holes 22d are designed for receiving the pivots 390 of the hinge of the tray 3. In this manner, the trays 3 become pivotable with respect to the support arm 2 for a certain angle. The indentations 22c allow holding a tray 3 in a rotated configuration.

The volume within the "U" shaped section is substantially longitudinally divided into two half sections by a longitudinal dividing wall 26. One of the two half sections, the right side one in Figure 9, is substantially empty. The other half section, the left side one in Figure 9, comprises a sheath clamp arrangement 24 and a number of guiding and retaining elements 25.

The sheath clamp arrangement 24 provides a clamping force for the outer layer of one or more optical cables or for one or more buffered fibers (only diagrammatically shown with reference number 5 in Figure 9.1). Through such a clamp arrangement 24, the outer layer of one or more optical cables or of one or more buffered fibers is clamped. The outer layer could be clamped by two fins having their facing edges at a certain distance which is slightly less than the outer diameter of the outer layer to be clamped. From this point, the sheath of the cable or the buffer of the buffered fiber is removed and one or more bare fibers are extracted and guided to reach the trays.

The bare optical fibers 51 extracted from the optical cable deprived of its sheath or from the buffered fiber deprived of its buffer are supported, guided and retained along the arm 2 by the guiding elements 25 which are designed for properly supporting the bare fibers along the pathway and for deviating the direction of such bare fibers 51 to enter the tray 3. Each of the bare fibers 51 is deviated towards the entrance of the channel 60, i.e. towards the second port 68 in the rear side of one tray 3.

As shown in figure 12, each bare optical fiber 51 is properly supported by the guiding element 25 to reach the hinge axis X of the tray. The bare fiber is then picked up along the hinge axis X by the guiding element 60 and supported in the pathway between the hinge axis X and the tray 3. If the tray 3 is rotated around its hinge axis X, the bare optical fiber 51 entering said tray 3 is subject to only a limited torsion substantially around said hinge axis X. The bending of the bare optical fiber 51 is profitably extremely limited or substantially eliminated.

The guiding and retaining elements 25 may profitably comprise guiding (possibly curved) walls and projecting tabs which prevent the optical fibers to move away from the arm 2.

Figure 9.1 diagrammatically shows the bare optical fibers 51 by dotted lines.

In view of the above detailed description, it becomes evident that the optical fiber management tray assembly 1 of the present invention is adapted to manage both buffered optical fibers 41 and bare optical fibers 51. The receiving space 385 at the back of the first port 38 allows the buffered optical fibers 41 to be accommodated with a proper bending. On the other hand, the bare optical fibers 51 are arranged in such a way that they are protected and properly guided in each point of the pathway to reach the tray. Particularly, bare fibers are first supported in a sort of closed section substantially corresponding to the half section 22 of the support arm 2 and the back central wall 37 of the set of trays 3. The bare optical fibers 51 are then smoothly accompanied to the tray 3 and into the tray 3 by channel 60 of the guiding element. The bare optical fibers 51 substantially are subject to only a limited twist around their respective axis. Profitably, the bare fibers 51 are not subject to further stresses, such as bending of their axis.

## Claims

1. An optical fiber tray (3) for holding at least a length of an optical fiber (41, 51) in a proper arrangement, said tray (3) having a hinge (39) in its rear side (3e) with a hinge axis (X) for connection to a support arm, wherein said tray (3) comprises:
at least a first port (38) arranged at the rear side (3e) of the tray and configured for allowing optical fibers of a first type (41) to enter/exit the tray (3) and
a guiding member (60) comprising a second port (68) on the hinge axis (X) and configured for allowing optical fibers of a second type (51) to enter the tray (3) along said hinge axis (X),
wherein said guiding member (60) is arranged in a central region of said rear side (3e), projects from said rear side (3e) of said tray (3) and is independent from said at least a first port (38), and
wherein said hinge (39) comprises two hinge pivots (390) and two support walls (391) supporting said two hinge pivots (390), wherein said guiding member (60) is arranged between said two support walls (391).

2. The optical fiber tray (3) of claim 1, wherein said guiding member (60) comprises a channel which is substantially open on the top and wherein said open top is partially closed by projecting tabs (601).

3. The optical fiber tray (3) of claim 1, wherein said guiding member (60) comprises a linear length and a curved end so that when said optical fiber of the second type (51) is at least partially within said guiding member, a length of said optical fiber of the second type (51) which is not supported by said guiding member (60) has its axis substantially coinciding with said hinge axis (X).

4. The optical fiber tray (3) of claim 1, comprising two first ports (38) positioned on either side of said rear side (3e).

5. The optical fiber tray (3) of claim 6, wherein said first ports (38) are recessed so that a receiving space (385) is provided.

6. The optical fiber tray (3) of claim 1, wherein said optical fibers of the second type (51) are bare optical fibers and comprise a core, a cladding, a coating and are free from a buffer layer around said coating; and
wherein said optical fibers of the first type (41) are buffered optical fibers and comprise a core, a cladding, a coating and a buffer layer around said coating.

7. An optical fiber management tray assembly (1) comprising the support arm (2) and at least one optical fiber tray (3) according to any of claims 1 to 6.

8. The assembly (1) of claim 7, wherein said at least one optical fiber tray (3) is hinged to the support arm (2) in such a way that it can be rotated around the hinge axis (X).

9. The assembly (1) of claim 7, wherein the support arm (2) comprises a section (22) comprising two parallel section wings (22a) and a section bottom surface (22b) therebetween, wherein each of the two parallel section wings (22a) comprises a plurality of indentations (22c) and holes (22d), wherein the indentations (22c) and holes (22d) of one section wing face the indentations (22c) and holes (22d) of the other section wing.

10. The assembly (1) of claim 9, wherein a volume within said section is substantially longitudinally divided into two half sections by a longitudinal dividing wall (26), wherein a first of the two half sections is substantially empty while a second of the two half sections comprises a sheath clamp arrangement (24) and a number of guiding and retaining elements (25).

## Patentansprüche

1. Glasfaser-Kassette (3), mit der wenigstens ein Abschnitt einer Glasfaser (41, 51) in einer ordnungsgemäßen Anordnung gehalten wird, wobei die Kassette (3) ein Scharnier (39) an ihrer hinteren Seite (3e) mit einer Scharnier-Achse (X) zur Verbindung mit einem Tragearm aufweist und die Kassette (3) umfasst:
wenigstens eine Anschlussöffnung (38), die an der hinteren Seite (3e) der Kassette angeordnet und so ausgeführt ist, dass sie zulässt, dass Glasfasern eines ersten Typs (41) in die Kassette (3) eintreten oder aus ihr austreten, sowie
ein Führungselement (60), das eine zweite Anschlussöffnung (68) an der Scharnier-Achse (X) umfasst, die so ausgeführt ist, dass sie zulässt, dass Glasfasern eines zweiten Typs (51) in die Kassette (3) entlang der Scharnier-Achse (X) eintreten,
wobei das Führungselement (60) in einem Mittelbereich der hinteren Seite (3e) angeordnet ist, von der hinteren Seite (3e) der Kassette (3) vorsteht und unabhängig von der ersten Anschlussöffnung (38) ist, und
das Scharnier (39) zwei Scharnier-Zapfen (390) sowie zwei Tragewände (391) umfasst, die die zwei Scharnier-Zapfen (390) tragen, wobei das Führungselement (60) zwischen den zwei Tragewänden (391) angeordnet ist.

2. Glasfaser-Kassette (3) nach Anspruch 1, wobei das Führungselement (60) einen Kanal umfasst, der an der Oberseite im Wesentlichen offen ist, und die offene Oberseite durch vorstehende Zungen (601) teilweise verschlossen wird.

3. Glasfaser-Kassette (3) nach Anspruch 1, wobei das Führungselement (60) einen geradlinigen Abschnitt und ein gekrümmtes Ende umfasst, so dass, wenn sich die Glasfaser des zweiten Typs (51) wenigstens teilweise im Inneren des Führungselementes befindet, die Achse eines Abschnitts der Glasfaser des zweiten Typs (51), der nicht von dem Führungselement (60) getragen wird, im Wesentlichen deckungsgleich mit der Scharnier-Achse (X) ist.

4. Glasfaser-Kassette (3) nach Anspruch 1, die zwei erste Anschlussöffnungen (38) umfasst, die an beiden Seiten der hinteren Seite (3e) positioniert sind.

5. Glasfaser-Kassette (3) nach Anspruch 6, wobei die ersten Anschlussöffnungen (38) vertieft sind, so dass ein Aufnahmeraum (385) vorhanden ist.

6. Glasfaser-Kassette (3) nach Anspruch 1,
wobei die Glasfasern des zweiten Typs (51) blanke Glasfasern sind und einen Kern, einen Mantel sowie eine Schutzbeschichtung umfassen und keine Pufferschicht um die Schutzbeschichtung herum aufweisen; und
die Glasfasern des ersten Typs (41) gepufferte Glasfasern sind und einen Kern, einen Mantel, eine Schutzbeschichtung sowie eine Pufferschicht um die Schutzbeschichtung herum umfassen.

7. Glasfaser-Führungskassettenanordnung (1), die den Tragearm (2) und wenigstens eine Glasfaser-Kassette (3) nach einem der Ansprüche 1 bis 6 umfasst.

8. Anordnung (1) nach Anspruch 7, wobei die wenigstens eine Glasfaser-Kassette (3) so an dem Tragearm (2) angelenkt ist, dass sie um die Scharnier-Achse (X) herum gedreht werden kann.

9. Anordnung (1) nach Anspruch 7, wobei der Tragearm (2) einen Teilabschnitt (22) umfasst, der zwei parallele Seitenflügel (22a) des Teilabschnitts sowie eine Bodenfläche (22b) des Teilabschnitts zwischen ihnen umfasst, wobei jeder der zwei parallelen Seitenflügel (22a) des Teilabschnitts eine Vielzahl von Vertiefungen (22c) und Löchern (22d) umfasst und die Vertiefungen (22c) und die Löcher (22d) eines Seitenflügels des Teilabschnitts den Vertiefungen (22c) und Löchern (22d) des anderen Seitenflügels des Teilabschnitts zugewandt sind.

10. Anordnung (1) nach Anspruch 9, wobei ein Raum innerhalb des Teilabschnitts durch eine Längs-Trennwand (26) im Wesentlichen in Längsrichtung in zwei Halb-Teilabschnitte unterteilt wird und ein erster der zwei Halb-Teilabschnitte im Wesentlichen leer ist, während ein zweiter der zwei Halb-Teilabschnitte eine Mantel-Klemmanordnung (24) sowie eine Anzahl von Führungs-und-Halte-Elementen (25) umfasst.

## Revendications

1. Plateau de fibres optiques (3) pour maintenir au moins une longueur d'une fibre optique (41, 51) dans un agencement correct, ledit plateau (3) ayant une articulation (39) dans son côté arrière (3e) avec un axe d'articulation (X) pour la connexion à un bras de support, dans lequel ledit plateau (3) comprend :
au moins un premier orifice (38) agencé au niveau du côté arrière (3e) du plateau et configuré pour permettre à des fibres optiques d'un premier type (41) d'entrer dans le/sortir du plateau (3) et
un élément de guidage (60) comprenant un deuxième orifice (68) sur l'axe d'articulation (X) et configuré pour permettre à des fibres optiques d'un deuxième type (51) d'entrer dans le plateau (3) le long dudit axe d'articulation (X),
dans lequel ledit élément de guidage (60) est agencé dans une région centrale dudit côté arrière (3e), fait saillie à partir dudit côté arrière (3e) dudit plateau (3) et est indépendant dudit au moins un premier orifice (38), et
dans lequel ladite articulation (39) comprend deux pivots d'articulation (390) et deux parois de support (391) supportant lesdits deux pivots d'articulation (390), dans lequel ledit élément de guidage (60) est agencé entre lesdites deux parois de support (391).

2. Plateau de fibres optiques (3) selon la revendication 1, dans lequel ledit élément de guidage (60) comprend un canal qui est sensiblement ouvert sur le dessus et dans lequel ledit dessus ouvert est partiellement fermé par des languettes faisant saillie (601).

3. Plateau de fibres optiques (3) selon la revendication 1, dans lequel ledit élément de guidage (60) comprend une longueur linéaire et une extrémité courbe de manière que, quand ladite fibre optique du deuxième type (51) est au moins partiellement à l'intérieur dudit élément de guidage, une longueur de ladite fibre optique du deuxième type (51) qui n'est pas supportée par ledit élément de guidage (60) a son axe sensiblement coïncidant avec ledit axe d'articulation (X).

4. Plateau de fibres optiques (3) selon la revendication 1, comprenant deux premiers orifices (38) positionnés d'un côté ou l'autre dudit côté arrière (3e).

5. Plateau de fibres optiques (3) selon la revendication 6, dans lequel lesdits premiers orifices (38) sont évidés de manière qu'un espace de réception (385) soit fourni.

6. Plateau de fibres optiques (3) selon la revendication 1,
dans lequel lesdites fibres optiques du deuxième type (51) sont des fibres optiques nues et comprennent un coeur, une gaine, un revêtement et sont dépourvues d'une couche tampon autour dudit revêtement ; et
dans lequel lesdites fibres optiques du premier type (41) sont des fibres optiques avec couche tampon et comprennent un coeur, une gaine, un revêtement et une couche tampon autour dudit revêtement.

7. Ensemble de plateau de gestion de fibres optiques (1) comprenant le bras de support (2) et au moins un plateau de fibres optiques (3) selon l'une quelconque des revendications 1 à 6.

8. Ensemble (1) selon la revendication 7, dans lequel ledit au moins un plateau de fibres optiques (3) est articulé sur le bras de support (2) de telle manière qu'il puisse être pivoté autour de l'axe d'articulation (X).

9. Ensemble (1) selon la revendication 7, dans lequel le bras de support (2) comprend un profilé (22) comprenant deux ailes de profilé parallèles (22a) et une surface inférieure de profilé (22b) entre elles, dans lequel chacune des ailes de profilé parallèles (22a) comprend une pluralité d'entailles (22c) et de trous (22d), dans lequel les entailles (22c) et les trous (22d) d'une aile de profilé font face aux entailles (22c) et aux trous (22d) de l'autre aile de profilé.

10. Ensemble (1) selon la revendication 9, dans lequel un volume dans ledit profilé est divisé sensiblement longitudinalement en deux moitiés de profilé par une paroi de division longitudinale (26), dans lequel une première des deux moitiés de profilé est sensiblement vide alors qu'une deuxième des deux moitiés de profilé comprend un agencement de serrage de gaine (24) et une pluralité d'éléments de guidage et de retenue (25).
